# EUROPEAN PATENT APPLICATION

(11) **EP 2 523 156 A1**
(43) Date of publication of application: **14.11.2012**
(21) Application number: 12167062.4
(22) Date of filing: 08.05.2012
(51) Int. Cl.: G06Q 30/00

(54) **Charging management apparatus, charging management system, and charging management program**

(30) Priority: 09.05.2011 JP 2011104169
(71) Applicant: Fujifilm Corporation, Minato-ku Tokyo (JP)
(72) Inventor: Maruoka, Daisuke, Tokyo (JP)
(74) Representative: Klunker . Schmitt-Nilson . Hirsch

(57) **Abstract**

A diagnosis supporting device (25) generates execution information (33) from an examination image (31) by using a rented computer program. The diagnosis supporting device (25) sends the execution information (33) of the computer program to a charging management server (43). The charging management server (43) stores the execution information (33) as an execution history (45) . The charging management server (43) includes a duplication judging section (65), an execution number calculating section (66), and a usage fee calculating section (67) . The duplication judging section (65) judges whether or not there are plural pieces of execution information (33) having the same examination ID. The execution number calculating section (66) counts the pieces of execution information (33) while eliminating the pieces of execution information (33) judged to be duplicated to calculate the execution number of times. The usage fee calculating section (67) multiplies the execution number of times calculated by the execution number calculating section (66) by a unit price to calculate a usage fee for the computer program.

## Description

### BACKGROUND OF THE INVENTION

### 1. FIELD OF THE INVENTION

The present invention relates to a charging management apparatus for calculating a usage fee for a computer program, for example, a charging management system for the same, and a charging management program for the same.

### 2. DESCRIPTION OF THE RELATED ART

A rental service for renting a computer program to a user and collecting a usage fee for the computer program from the user is known. Japanese Patent Laid-Open Publication No. 2002-163578 discloses a charging management system for charging management of a usage fee for a rental service. A charging scheme of such a rental service includes usage-based billing for charging based on the usage of a user, and flat-rate billing for charging a flat fee regardless of the usage of a user. If the usage frequency is high, the flat-rate billing gets cheaper for the user, and if the usage frequency is low, the usage-based billing gets cheaper for the user, in general. Therefore, the usage-based billing has great merit for the user when the usage frequency of a computer program or the like by the user is low.

According to the charging management system of Japanese Patent Laid-Open Publication No. 2002-163578, in the rental service adopting a charging scheme of usage-based billing, the length of time and the number of times the user uses the computer program are obtained as the usage of the user via a communication network such as internet in real time, and the usage fee for the computer program is calculated based on the obtained usage of the user.

Among various kinds of computer programs, there is a computer program which executes processing based on input data inputted by a user and outputs a result of the processing. For example, in the case where the input data is an image, an image processing program executes image processing and outputs the image subjected to the image processing as the processing result. In the case where the input data is medical examination data, an evaluation program subjects the medical examination data to the evaluation processing and outputs the evaluation result as the processing result, and a measurement program subjects the medical examination data to the measurement processing and outputs the measurement result as the measurement result.

As the evaluation program, there is a health condition evaluation program. When blood test data or blood pressure measured value are inputted as medical examination data, the health condition evaluation program executes evaluation processing for evaluating the heath condition of a test subject based on the blood test data or blood pressure measured value, and outputs the evaluation result. As the measurement program, there is a bone mineral content measurement program. The bone mineral content measurement program subjects an X-ray image, which is obtained by X-ray radiography of a palm of the hand of the test subject, to image analysis processing, and outputs the bone mineral content as the measurement result.

In the case where the rental service of the computer program as described above is provided under a charging scheme of usage-based billing in which the usage fee can be low, the usage fee is calculated in accordance with the execution number of times the computer program executes the processing such as image processing, evaluation processing, and measurement processing, as in the case of the charging management system of Japanese Patent Laid-Open Publication No. 2002-163578.

However, when the usage fee is calculated by simply counting the execution number of times of the computer program as in the case of the charging management system of Japanese Patent Laid-Open Publication No. 2002-163578, there arise the following problems. Firstly, if the same input data is subjected to the processing plural times due to wrong operation, the usage fee for execution of the processing due to wrong operation is also charged. Further, after the processing is executed once, the same input data is subjected to the processing again for confirmation in some cases. However, in this case, the usage fee for re-execution of the processing for confirmation is also charged.

In the case where the usage fee for duplicated execution of the processing due to wrong operation and the usage fee for re-execution of the processing for confirmation are charged, since the input data and the processing results are the same as those at the first execution of the processing, the user may have an impression that an actual usage pattern of the user is not adequately reflected in the charging scheme and the usage fee is expensive unfairly. Therefore, the user has a reluctance to use the rental service. Such a problem may lead to slower growth of the usage of the rental service in the long term, and may be problematic for distributors for providing the rental service. The problems described above and a solution for the problems are not disclosed or suggested in Japanese Patent Laid-Open Publication No. 2002-163578.

### SUMMARY OF THE INVENTION

In view of the above, an object of the present invention is to provide a charging management apparatus capable of calculating a usage fee, in which an actual usage pattern of a user is adequately reflected, in charging management of a usage fee for a computer program adopting a charging scheme of usage-based billing.

In order to achieve the above and other objects, a charging management apparatus of the present invention includes an execution history creating section, a duplication judging section, and an execution number calculating section. The execution history creating section creates an execution history of the computer program based on execution information containing an input data ID for identifying the input data one by one and indicating that the processing has been executed. The duplication judging section checks whether or not there are plural pieces of the execution information having the same input data ID by referring to the execution history, and judges that there are duplicated pieces of the execution information if there are plural pieces of execution information having the same input data ID in the execution history. The execution number calculating section counts the number of pieces of the execution information during a calculation period of the usage fee so as to calculate the execution number of times while eliminating the pieces of execution information judged to be duplicated by the duplication judging section.

The computer program is for a medical purpose. The charging management apparatus further includes a receiving section disposed in a medical institution and connected to a program executing device installed with the computer program via a communication network so as to communicate with the program executing device, and the receiving section receives the execution information from the program executing device. The execution history creating section creates the execution history based on the execution information received by the receiving section. The charging management apparatus further includes a usage fee calculating section for calculating the usage fee by multiplying the calculated execution number of times by a unit price, and the usage fee calculating section calculates the usage fee based on the execution number of times for each of the medical institutions. The execution history for each of the medical institutions is created by the execution history creating section.

A target to be judged by the duplication judging section includes the execution information generated during the calculation period and the execution information generated before the calculation period. Further, the target to be judged by the duplication judging section includes the execution information generated during the calculation period and the execution information generated during a predetermined period before the calculation period. Furthermore, the calculation period is flexible.

The execution number calculating section counts the number of pieces of the execution information during the calculation period after all pieces of execution information during the calculation period are stored in the execution history. Further, the execution number calculating section may count the number of pieces of the execution information at the time when the execution information is stored in the execution history. Note that, the duplication judgment section judges whether or not there are duplicated pieces of the execution information at the time of counting the number of pieces of the execution information.

It is also preferable that the duplication judging section judges whether or not there are duplicated pieces of the execution information at the time when the execution information is stored in the execution history, and if there are duplicated pieces of the execution information, the duplication judging section stores a duplication flag indicating that there are duplicated pieces of the execution information in the execution history, and the execution number calculating section calculates the execution number of times by referring to the duplication flag.

The computer program is capable of executing plural kinds of processing, and the execution information is assigned with a processing ID indicating the kind of processing. The duplication judging section judges whether or not there are duplicated pieces of the execution information for each of the processing IDs.

The input data is an examination image which is obtained by a medical examination and assigned with a DICOM tag, and the input data ID is an examination ID stored in the DICOM tag. Further, the computer program is a bone mineral content measurement program for measuring a bone mineral content by an image analysis of the examination image.

Further, a charging management system of the present invention includes the charging management apparatus described above, a request outputting section for outputting a request for calculating the execution number of times to the charging management apparatus, and an input data outputting device for outputting the input data to the charging management apparatus.

A charging management program of the present invention causes a computer to function as an apparatus including an execution history creating section, a duplication judging section, and a duplication judging section. The execution history creating section creates an execution history of the computer program based on execution information containing an input data ID for identifying the input data one by one and indicating that the processing has been executed. The duplication judging section checks whether or not there are plural pieces of the execution information having the same input data ID by referring to the execution history, and judges that there are duplicated pieces of the execution information if there are plural pieces of execution information having the same input data ID in the execution history. The execution number calculating section counts the number of pieces of the execution information during a calculation period of the usage fee except the duplicated pieces of execution information so as to calculate the execution number of times.

According to the present invention, since the duplicated pieces of execution information are eliminated from the target to be counted and are not counted as the execution number of times, it is possible to avoid charging the fee for executing the processing by wrong operation or re-execution. Consequently, according to the present invention, it is possible to calculate the usage fee in which the actual usage pattern of the user is adequately reflected.

Additionally, most programs for medical use are expensive, and the unit price for using the program is relatively high, and therefore it is necessary to avoid charging the usage fee for redundant execution of the program. Further, it is hard to count the usage fee for redundant execution of the program in medical fee, and therefore the medical institution must bear the usage fee for redundant execution of the program in many cases. Furthermore, for the purpose of preventing errors in diagnosis in medical examination and treatment, re-confirmation of the processing result is performed many times. According to the present invention, since re-confirmation can be performed without minding the usage fee, it is possible to provide a rental service having high utility.

### DESCRIPTION OF THE DRAWINGS

The above objects and advantages of the present invention will become easily understood by one of ordinary skill in the art when the following detailed description of the preferred embodiments would be read in connection with the accompanying drawings, wherein:
Figure 1 is a configuration diagram schematically showing a charging management system of the present invention;
Figure 2 is an explanatory view of an examination image;
Figure 3 is an explanatory view of execution information;
Figure 4 is an explanatory view of an execution history;
Figure 5 is an explanatory view of charge billing information;
Figure 6 is an explanatory view of an institution table;
Figure 7 is a configuration diagram schematically showing a computer;
Figure 8 is a function block diagram of the charging management system according to a first embodiment;
Figure 9 is a flow chart showing an operation of the charging management system according to the first embodiment; and
Figure 10 is a flow chart showing an operation of the charging management system according to a second embodiment.

### DESCRIPTION OF THE PREFERRED EMBODIMENTS

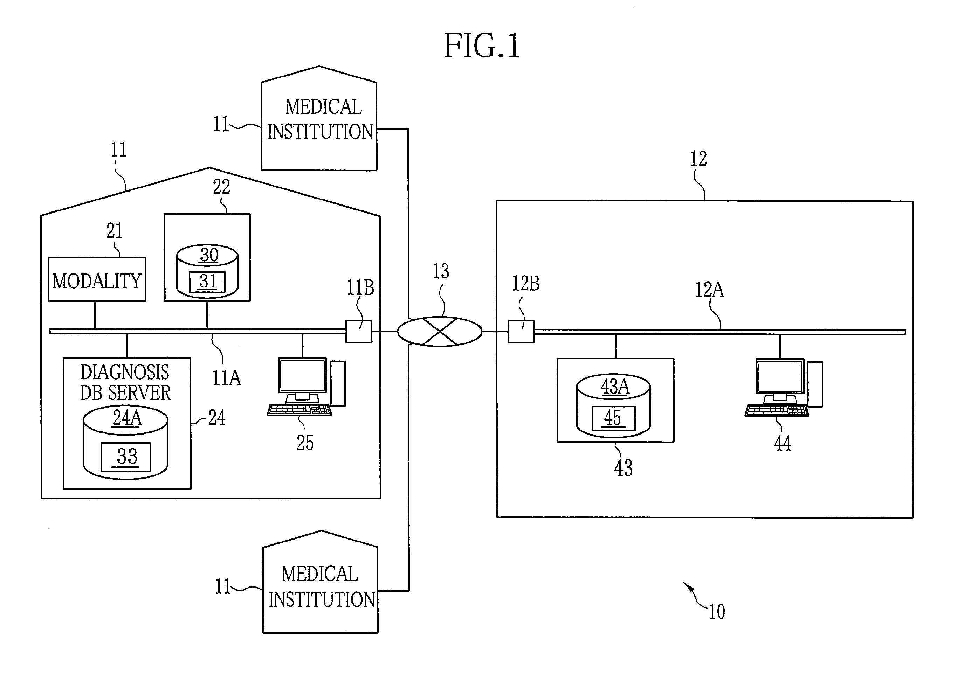

In Fig. 1, a certain program is rented to medical institutions 11, and a charging management system 10 calculates a usage fee for the program, which is charged to each of the medical institutions 11, in accordance with the number of times the program is executed in each of the medical institutions 11. The charging management system 10 consists of a network 11A set in each of the medical institutions 11, a network 12A set in a charging management center 12, an internet connection section for connecting each of the network 11A and the network 12A to internet 13, and networking equipment connectable to each of the network 11A and the network 12A. Each of the network 11A and the network 12A is a local area network (LAN), for example. The internet connection section consists of a router 11B for connecting the network 11A to the internet 13, and a router 12B for connecting the network 12A to the internet 13. The internet connection section enables communication between the networking equipment connected to the network 11A and the networking equipment connected to the network 12A.

The networking equipment connectable to the network 11A includes a modality 21, a picture archiving and communication system (PACS) server 22, a diagnosis database (DB) server 24, and a diagnosis supporting device 25.

The modality 21 is an X-ray imaging device, for example, and subjects a patient to a predetermined examination upon operation of an operation section provided to the modality 21. The modality 21 creates an examination image 31 through the examination.

The PACS server 22 has an examination image DB 30 for storing the examination image 31 obtained by the modality 21. The examination image 31 stored in the examination image DB 30 is treated as an original image.

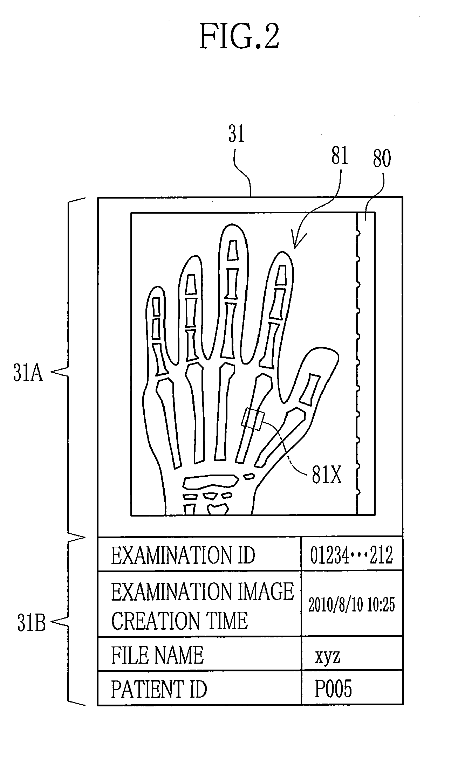

The examination image 31 is image data based on digital imaging and communication in medicine (DICOM) standard, for example. As shown in Fig. 2, the examination image 31 consists of an image information section 31A and an additional information section 31B. The image information section 31A stores an examination image file obtained by the modality 21. The additional information section 31B contains an examination ID, an examination image creation time, a file name, and a patient ID. The examination ID is a unique identifier relating to the examination image such as Study Instance UID. The examination image creation time is the time when the examination image was created. The file name is a name of an examination image file stored in the image information section 31A. The patient ID is a unique identifier assigned to each patient. The items stored in the additional information section 31B are inputted by the modality 21.

The diagnosis DB server 24 includes a diagnosis data memory section 24A. The diagnosis data memory section 24A stores execution information 33 obtained from the examination image 31. The intended execution information 33 can be retrieved from the diagnosis data memory section 24A of the diagnosis DB server 24 with use of a certain item as a search key. It is to be noted that the diagnosis DB server 24 may be provided in the diagnosis supporting device 25.

The diagnosis supporting device 25 sends a browsing request of the examination image 31 stored in the examination image DB 30 to the PACS server 22, and displays the requested examination image 31 on a display. The PACS is constituted by the PACS server 22 and the diagnosis supporting device 25, as described above.

The diagnosis supporting device 25 creates the execution information 33 from the examination image 31 stored in the examination image DB 30 upon execution of a program for quantitative measurement of bone mineral content, for example, which is rented to each of the medical institutions 11. The diagnosis supporting device 25 stores the obtained execution information 33 in the diagnosis DB server 24. Further, the diagnosis supporting device 25 sends the execution information 33 to the charging management center 12.

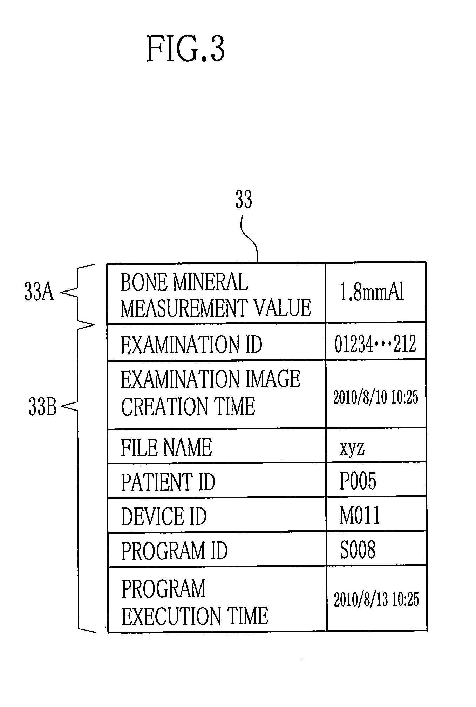

As shown in Fig. 3, the execution information 33 consists of a processing result section 33A and an additional information section 33B. The processing result section 33A stores a bone mineral content measured by the program for quantitative measurement of bone mineral content based on the examination image 31 stored in the image information section 31A.

The additional information section 33B contains the examination ID, the examination image creation time, the file name, the patient ID, a device ID, a program ID, and a program execution time. The items stored in the additional information section 33B are common to those stored in the additional information section 31B (see Fig. 2) except the device ID, the program ID, and the program execution time. The items stored in the additional information section 33B, which are common to those stored in the additional information section 31B, are inputted as copies from the additional information section 31B by the diagnosis supporting device 25. The device ID, the program ID, and the program execution time are inputted by the diagnosis supporting device 25.

The device ID is a unique identifier assigned to each of the diagnosis supporting devices 25 connected to the charging management center 12. Therefore, on the basis of the device ID, it is possible to distinguish the diagnosis supporting device 25 provided to one of the medical institutions 11 from the diagnosis supporting device 25 provided to another one of the medical institutions 11. The program ID is a unique identifier designating the program for quantitative measurement of bone mineral content. The program execution time is the time when the program for quantitative measurement of bone mineral content was executed.

Returning to Fig. 1, the networking equipment connectable to the network 12A includes a charging management server 43 and an operation terminal 44.

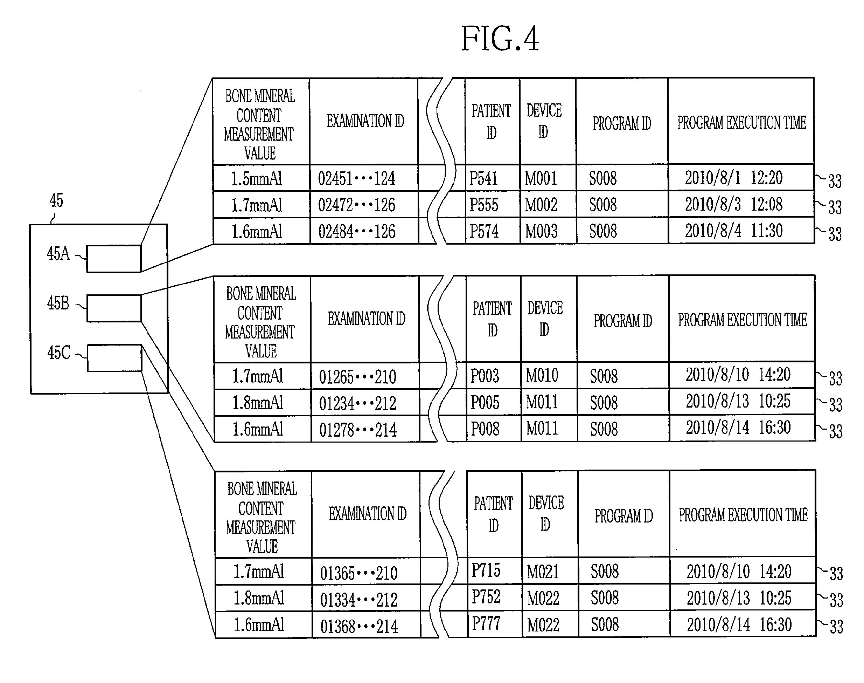

The charging management server 43 provided with a memory section 43A receives the execution information 33 sent from the medical institution 11, and stores the received execution information 33 as an execution history 45 (see Fig. 4) in the memory section 43A. The details about the execution history 45 are described later. The intended information can be retrieved from the memory section 43A with use of a certain item as a search key.

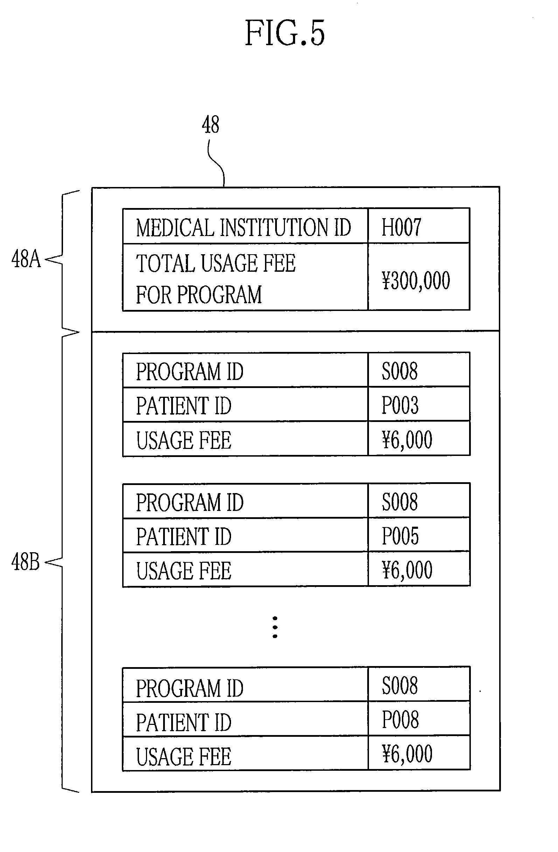

Further, the charging management server 43 counts up the number of times the program for quantitative measurement of bone mineral content is used during a predetermined calculation period, for example, on a monthly basis, based on the execution history 45, for each of the medical institutions 11. Additionally, the charging management server 43 generates charge billing information 48 (see Fig. 5) in accordance with the number of times the program for quantitative measurement of bone mineral content was used for each of the medical institutions 11. A billing statement created based on the charge billing information 48 is dispatched from the charging management center 12 to each of the medical institutions 11.

As shown in Fig. 5, the charge billing information 48 consists of a total charge section 48A and a detail section 48B. The total charge section 48A contains a medical institution ID and a total usage fee for the program. The medical institution ID is a unique identifier representing the medical institution. The total usage fee for the program is the total usage fee for the program for quantitative measurement of bone mineral content relating to the medical institution ID, that is, the sum of the usage fees contained in the detail section 48B.

The usage history of the program for each time of use is stored in the detail section 48B. The usage history contains the program ID, the patient ID, and the usage fee. The program ID and the patient ID are inputted as copies from the additional information section 33B (see Fig. 3). The usage fee is determined in accordance with the program ID by referring to a unit price table in which the program ID is associated with a unit price for using the program indicated by the program ID. The unit price table is stored in the memory section 43A, for example.

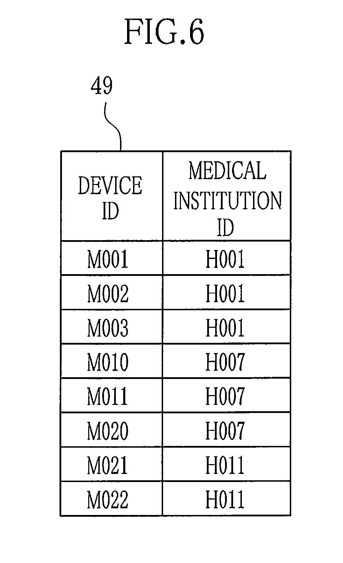

The medical institution ID is determined in accordance with the device ID of the execution information 33 (see Fig. 3) by referring to a medical institution table 49 shown in Fig. 6. The medical institution table 49 shows the association between the device ID as the identifier of the diagnosis supporting device 25 and the medical institution ID equipped with the diagnosis supporting device 25. The medical institution table 49 is stored in a storage device of the charging management server 43, for example.

The operation terminal 44 sends a predetermined request to the charging management server 43, and receives the result of the request from the charging management server 43.

Each of the PACS server 22, the diagnosis DB server 24, the diagnosis supporting device 25, the charging management server 43, and the operation terminal 44 is established by installing a control program such as an operating system and an application program such as a client program or a server program on a computer such as a personal computer, a server computer, and a work station.

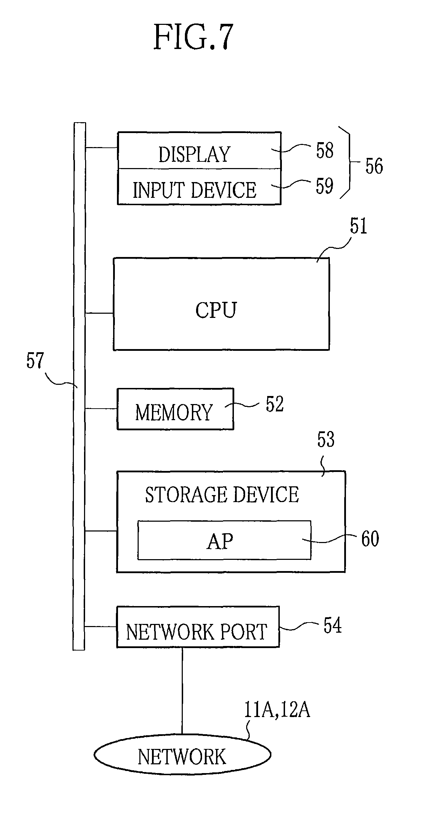

As shown in Fig. 7, a basic structure of the computer is approximately common, and specifically includes a CPU 51, a memory 52, a storage device 53, a network port 54, and a console 56, which are connected via a data bus 57. The console 56 consists of a display 58 and an input device 59 such as a keyboard, a mouse, and a touch panel.

The storage device 53 is a hard disk drive (HDD), for example, and stores the control program and the application program (hereinafter referred to as AP) 60. Further, each of the servers such as the diagnosis DB server 24 and the charging management server 43, in which the DB is established, is provided with a DB storage device 53 in addition to the HDD for storing the program. The DB storage device 53 is a disk array mounted with a plurality of HDDs, for example. The disk array may be may be incorporated into the server, or may be provided separately from the server and connected to the server via a cable or a network.

The memory 52 is a work memory for causing the CPU 51 to execute the processing. The CPU 51 loads the control program stored in the storage device 53 to the memory 52, and executes processing in accordance with the control program, so as to perform overall control of the respective components of the computer. The network port 54 is a network interface for controlling transmission between the networks 11A and 12A.

A server program for executing processing in accordance with the request from designated networking equipment and sending the processing result is installed as the AP 60 to each of the diagnosis DB server 24 and the charging management server 43. The CPU of each of the diagnosis DB server 24 and the charging management server 43 functions as a storage processing part and a retrieval processing part upon execution of the server program. In response to a request for storing data, the storage processing part executes the processing for storing the designated data in the designated DB. In response to a request for sending data, the retrieval processing part retrieves the requested data from each of the DBs, and sends the retrieved data to the requestor.

Further, a server program for executing the processing in accordance with the request from the operation terminal 44 and sending the processing result is installed as the AP 60 to the charging management server 43. The server program includes charging management software for calculating the usage fee for the program for quantitative measurement of bone mineral content based on the execution information 33 stored in the memory section 43A for each of the medical institutions 11.

Client programs such as image viewing software for browsing the examination image 31 stored in the PACS server 22 and software for quantitative measurement of bone mineral content for executing the program for quantitative measurement of bone mineral content are installed as the AP 60 to the diagnosis supporting device 25. When the client program is activated, an operation screen using the graphical user interface (GUI) is displayed on the display of the diagnosis supporting device 25.

A client program for outputting a designated request to the charging management server 43 and receiving the result of the request from the charging management server 43 is installed as the AP 60 to the operation terminal 44. When the client program is activated, an operation screen using the GUI is displayed on the display of the operation terminal 44.

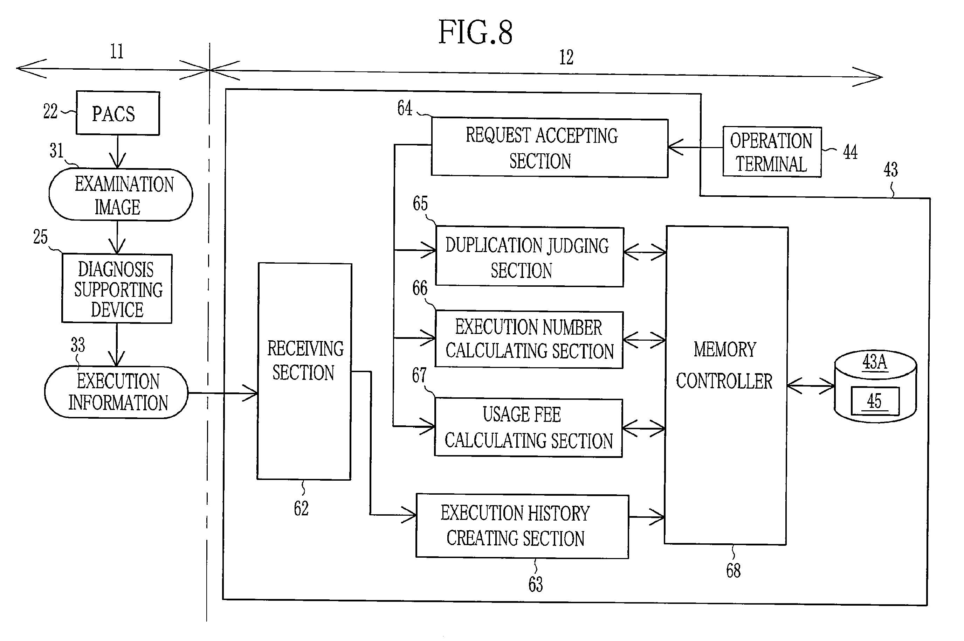

As shown in Fig. 8, upon execution of the server program, the CPU of the charging management server 43 functions as a receiving section 62, an execution history creating section 63, a request accepting section 64, a duplication judging section 65, an execution number calculating section 66, a usage fee calculating section 67, and a memory controller 68.

The receiving section 62 receives the execution information 33 sent from the diagnosis supporting device 25. The execution history creating section 63 creates or updates the execution history 45 (see Fig. 4) based on the device ID and the medical institution table 49 (see Fig. 6) read out from the execution information 33 (see Fig. 3) received by the receiving section 62. The execution history 45 is preferably created for each of the medical institutions 11 as execution histories 45A, 45B, and 45C.

The request accepting section 64 receives a request signal from the operation terminal 44. The request signal sent from the operation terminal 44 includes the medical institution ID to which a bill is sent, and the calculation period. The medical institution ID and the calculation period are inputted through the operation of the operation terminal 44, and changeable. For example, in the case of calculating the fee during August, the calculation period includes "the program execution time from August 1 to August 31 inclusive". Furthermore, the request accepting section 64 outputs the request signal from the operation terminal 44 to each of the duplication judging section 65, the execution number calculating section 66, and the usage fee calculating section 67.

The duplication judging section 65 performs duplication judgment based on the request signal from the request accepting section 64. In the duplication judgment, the duplication judging section 65 refers to the execution history 45, and checks whether or not there are plural pieces of execution information 33 having the same examination ID among the pieces of execution information 33 during the calculation period. If there are plural pieces of execution information 33 having the same examination ID, the duplication judging section 65 judges that there are duplicated pieces of the execution information 33.

In accordance with the request signal from the request accepting section 64, the execution number calculating section 66 refers to the execution history 45 and counts the number of pieces of the execution information 33 during the calculation period, so as to calculate the execution number of times. At the time of calculating the execution number of times, the execution number calculating section 66 counts one of the pieces of the execution information 33 judged to be duplicated as the execution number of times, and does not count remaining pieces of the execution information 33 judged to be duplicated as the execution number of times. Accordingly, the execution number calculating section 66 counts the execution number of times while eliminating the execution information 33 judged to be duplicated by the duplication judging section 65.

The usage fee calculating section 67 multiplies the execution number of times calculated by the execution number calculating section 66 by the unit price to calculate the total usage fee for the program rented to each of the medical institutions 11(see Fig. 5). Further, based on the calculated total usage fee for the program, the execution history 45, and the like, the usage fee calculating section 67 generates charge billing information 48.

In response to the request from the execution history creating section 63, the duplication judging section 65, the execution number calculating section 66, and the usage fee calculating section 67, the memory controller 68 inputs each of the pieces of information to the memory section 43A. Further, in response to the request from the sections 63, and 65 to 67, the memory controller 68 outputs each of the pieces of information stored in the memory section 43A to each of the requestors.

Next, an operation of the charging management system described above is explained hereinbelow. At first, X-ray radiography is performed by the modality 21 (see Fig. 1) to create the examination image 31. An X-ray image of a left hand 81 and an aluminum scale 80 captured together is stored in the image information section 31A of the created examination image 31 (see Fig. 2). The PACS server 22 stores the examination image 31 obtained by the modality 21 in the examination image DB 30 (see Fig. 1) .

The diagnosis supporting device 25 reads out the examination image 31 concerning the patient from the diagnosis data memory section 24A (see Fig. 1) in response to the operation of the input device 59. Then, the diagnosis supporting device 25 subjects the read-out examination image 31 (see Fig. 2) to the program for quantitative measurement of bone mineral content rented to each of the medical institutions 11 in response to the operation of the input device 59. The program for quantitative measurement of bone mineral content sets a predetermined portion of the left hand 81, for example, a central portion of a second metacarpal bone of the left hand 81 in the X-ray image as a measurement range 81X. Further, the program for quantitative measurement of bone mineral content measures a bone mineral content in the measurement range 81X thus set based on a gray value of the aluminum scale 80. Furthermore, the program for quantitative measurement of bone mineral content generates the execution information 33 (see Fig. 3) from the examination image 31 (see Fig. 2).

The diagnosis supporting device 25 stores the execution information 33 in the diagnosis DB server 24 (see Fig. 1). Additionally, the diagnosis supporting device 25 sends a copy of the execution information 33 to the charging management center 12.

The charging management server 43 stores the execution information 33 sent from the medical institution 11 as the execution history 45 in the memory section 43A. The charging management server 43 generates the charge billing information 48 by referring to the execution history 45 stored in the memory section 43A in accordance with the request from the operation terminal 44 (see Fig. 1).

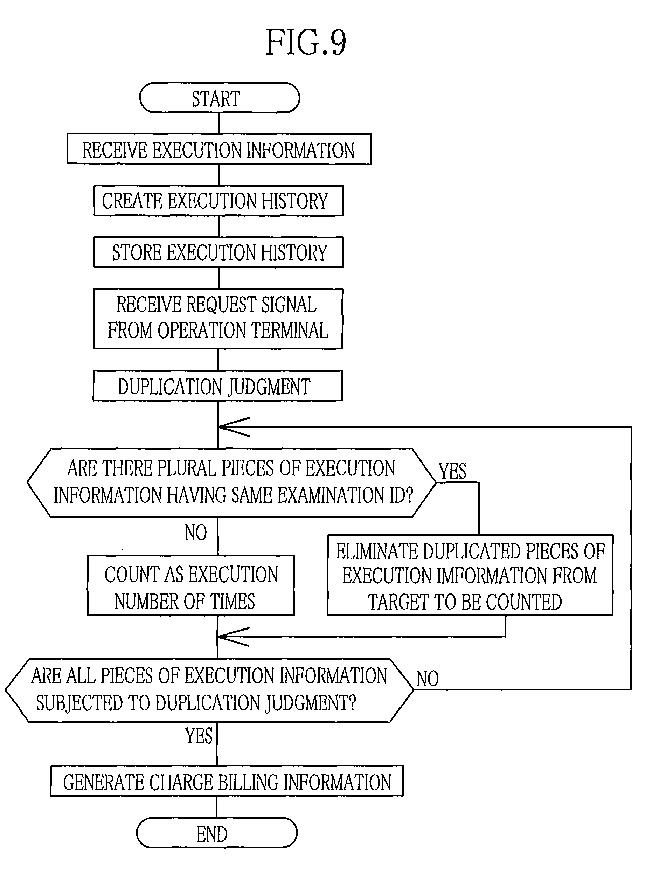

The charge billing information 48 is created as shown by a flow of Fig. 9, for example. As shown in Fig. 8, the receiving section 62 receives the execution information 33. The execution history creating section 63 creates the execution history 45 from the execution information 33 received by the receiving section 62. The memory controller 68 stores the execution history 45 in the memory section 43A.

Through the operation of the operation terminal 44 (see Fig. 1), the request signal is sent to the charging management server 43. The request accepting section 64 receives the request signal from the operation terminal 44 (see Fig. 1). The request accepting section 64 outputs the request signal from the operation terminal 44 to each of the duplication judging section 65, the execution number calculating section 66, and the usage fee calculating section 67.

The duplication judging section 65 performs duplication judgment based on the request signal from the request accepting section 64 . In the duplication judgment, the duplication judging section 65 refers to the execution history 45 to check whether or not there are plural pieces of execution information 33 having the same examination ID among the pieces of execution information 33 of the medical institution ID relating to the request signal during the calculation period relating to the request signal. If there are plural pieces of execution information 33 having the same examination ID, the duplication judging section 65 judges that there are duplicated pieces of the execution information 33 with regard to the examination ID.

The execution number calculating section 66 counts the pieces of execution information 33 judged not to be duplicated as the execution number of times. Further, the execution number calculating section 66 counts one of the pieces of execution information 33 judged to be duplicated as the execution number of times, and eliminates remaining ones of the pieces of execution information 33 judged to be duplicated from the target to be counted. All the pieces of execution information 33 of the medical institution ID relating to the request signal during the calculation period relating to the request signal are subjected to the duplication judgment by the duplication judging section 65 and the counting operation of the execution number of times by the execution number calculating section 66.

After the duplication judgment and the counting operation of the execution number of times for all of the pieces of execution information 33 are completed, the usage fee calculating section 67 calculates the usage fee for the program (see Fig. 5) by multiplying the execution number of times calculated by the execution number calculating section 66 by the unit price.

As described above, according to the present invention, it is possible to eliminate the redundantly-stored pieces of the execution information 33 from the target to be counted by referring to the execution history 45 stored in the memory section 43A.

In the case where the charging process is performed monthly, the calculation period is generally set to one month. However, when the execution information 33 having the same execution ID exists at both of the end of the month and the beginning of the next month, if the duplication judgment is performed for only the calculation period (namely, for one month), duplication judgment may not be performed sufficiently for all the pieces of execution information 33. In view of the above, the range to be subjected to the duplication judgment includes an additional period before the calculation period in addition to the calculation period, so as to make it possible to prevent failure in the duplication judgment for the execution information 33 having the same execution ID existing at both of the end of the month and the beginning of the next month. The additional period means a period extending from a point of time before the calculation period to a time of commencement of the calculation period, and may be a period including all of the pieces of execution information 33 or a predetermined period such as for one month.

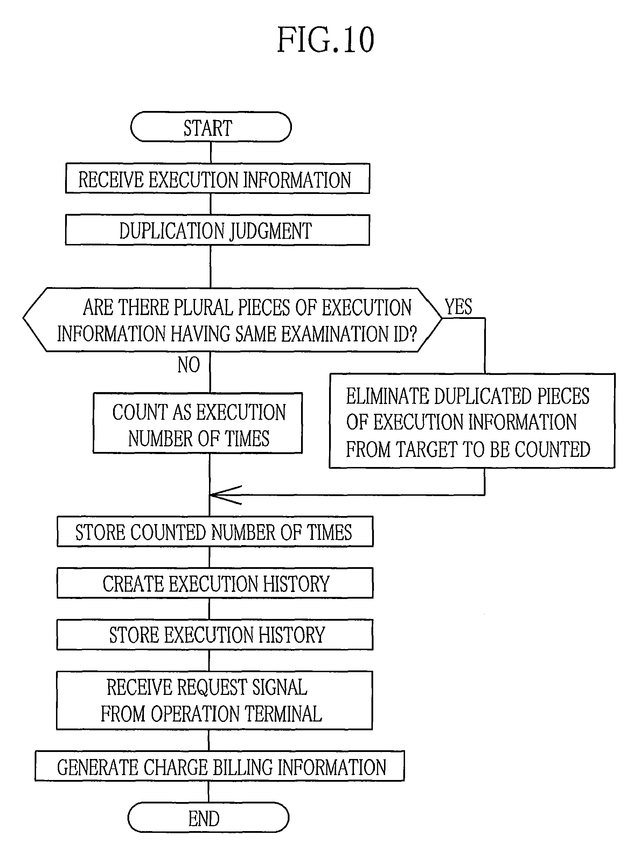

The duplication judgment and the counting operation of the execution number of times are performed after the execution information 33 is stored as the execution history 45 in the memory section 43A in the above embodiment. However, alternatively, the duplication judgment and the counting operation of the execution number of times may be performed at the time when the execution information 33 is stored as the execution history 45 in the memory section 43A as shown in the flow of Fig. 10.

Upon receiving the execution information 33, the receiving section 62 outputs the request signal to the duplication judging section 65. The request signal from the receiving section 62 contains the execution information 33.

The duplication judging section 65 performs duplication judgment based on the request signal from the receiving section 62. In the duplication judgment, the duplication judging section 65 refers to the execution information 33 contained in the request signal from the receiving section 62 and the execution history 45, and checks whether or not there is the execution information 33 having the examination ID coincident with the examination ID relating to the request signal in the execution history 45. If there is the execution information 33 having the examination ID coincident with the examination ID relating to the request signal in the execution history 45, the duplication judging section 65 judges that there are duplicated pieces of the execution information 33 with regard to the examination ID.

The execution number calculating section 66 counts the pieces of execution information 33 judged not to be duplicated as the execution number of times. Further, the execution number calculating section 66 eliminates the pieces of execution information 33 judged to be duplicated from the target to be counted. Furthermore, the execution number calculating section 66 stores the execution number of times thus counted in the memory section 43A for each of the predetermined medical institution IDs .

The execution history creating section 63 adds the received execution information 33 to the execution history 45 stored in the memory section 43A. Thus, the execution history 45 is updated.

Upon receiving the request signal from the operation terminal 44, the request accepting section 64 outputs the request signal to the usage fee calculating section 67. In accordance with the request signal from the operation terminal 44, the usage fee calculating section 67 multiplies the execution number of times read out from the memory section 43A by the unit price to calculate the total usage fee for the program (see Fig. 5).

Note that, instead of storing the counted execution number of times in the memory section 43A by the execution number calculating section 66, the result of duplication judgment may be added to the execution information 33 stored in the memory section 43A by the duplication judging section 65. In this case, the execution number calculating section 66 may count the execution number of times while eliminating the execution information 33 judged to be duplicated by referring to the result of duplication judgment.

Note that, also in the case where a plurality of the diagnosis supporting devices 25, namely, the first diagnosis supporting device and the second diagnosis supporting device are provided in one medical institution 11, the present invention is applicable. According to the present invention, the duplication judgment by the duplication judging section 65 and the counting operation of the execution number of times by the execution number calculating section 66 are performed for each of the medical institutions 11. Therefore, in the case where the first diagnosis supporting device executes the program for quantitative measurement of bone mineral content at first, and then, the program for quantitative measurement of bone mineral content is re-executed for confirmation by the second diagnosis supporting device, no usage fee is charged.

Although the device ID is read out from the execution information 33, and the medical institution ID relating to the execution information 33 is identified by referring to the device ID thus read out and the medical institution table 49 in the above embodiment, the device ID may be preliminarily added to the execution information 33.

Note that, the diagnosis supporting device 25 may send the execution information 33 every time the program for quantitative measurement of bone mineral content is executed, or may periodically send the execution information 33 corresponding to plural times of execution of the program for quantitative measurement of bone mineral content.

Further, the present invention is also applicable if the program for quantitative measurement of bone mineral content is not installed to the diagnosis supporting device 25. For example, the diagnosis supporting device 25 may send the input data to a server installed with the program for quantitative measurement of bone mineral content (such as the charging management server 43) via network, and receive the result of execution from the server. In this case, the execution information 33 is created by the server.

Note that, in addition to the program for quantitative measurement of bone mineral content, any computer program may be adopted as long as the computer program can output the result of execution which is uniquely determined based on the input data upon subjecting the input data to the processing.

Further, the number of the computer programs as the target to be charged is not limited to one, and may be one or more. In this case, the duplication judgment may be performed for each of the program IDs for identifying the computer program.

Although the examination image as the input data is the X-ray image in the above embodiment, as a matter of course, the examination image is not limited thereto. The examination image may be one obtained by other examinations such as computed radiology (CR) examination, computed tomography (CT) examination, magnetic resonance imaging (MRI) examination, positron emission tomography (PET) examination, ultrasound examination, and endoscopic examination. Further, the input image is not limited to the examination image, and may be a result of measurement of a predetermined parameter.

Note that, one examination ID may be combined with a plurality of examination images depending on the kind of examination. In such a case, the duplication judgment may be performed in accordance with the examination ID, or may be performed in accordance with an identifier such as a file name of each of examination images.

Further, the memory device for establishing the DB is not limited to the DB server, and may be a storage device to be connected via a network, such as network attached storage (NAS) and storage area network (SAN). In such a way, the physical configuration of the computer system may be arbitrarily changed.

Various changes and modifications are possible in the present invention and may be understood to be within the present invention.

## Claims

1. A charging management apparatus (12) for calculating a usage fee for a computer program which executes processing based on input data and outputs a result of the processing in accordance with the execution number of times the processing is executed, said charging management apparatus (12) comprising:
an execution history creating section (63) for creating an execution history (45) of said computer program based on execution information (33) containing an input data ID for identifying the input data one by one and indicating that the processing has been executed;
a duplication judging section (65) for checking whether or not there are plural pieces of said execution information (33) having the same input data ID by referring to said execution history (45), and judging that there are duplicated pieces of said execution information (33) if there are plural pieces of execution information (33) having the same input data ID in said execution history (45); and
an execution number calculating section (66) for counting the number of pieces of said execution information (33) during a calculation period of said usage fee so as to calculate the execution number of times while eliminating the pieces of execution information (33) judged to be duplicated by said duplication judging section (65).

2. A charging management apparatus (12) as defined in claim 1, wherein said computer program is for a medical purpose.

3. A charging management apparatus (12) as defined in claim 2, further comprising a receiving section (62) disposed in a medical institution (11) and connected to a program executing device (25) installed with said computer program via a communication network so as to communicate with said program executing device (25), said receiving section (62) receiving said execution information (33) from said program executing device (25),
wherein said execution history creating section (63) creates said execution history (45) based on said execution information (33) received by said receiving section (62).

4. A charging management apparatus (12) as defined in claim 3, further comprising a usage fee calculating section (67) for calculating said usage fee by multiplying the calculated execution number of times by a unit price, said usage fee calculating section (67) calculating said usage fee based on the execution number of times for each of said medical institutions (11), and said execution history (45) for each of said medical institutions (11) being created by said execution history creating section (63).

5. A charging management apparatus (12) as defined in claim 1, wherein a target to be judged by said duplication judging section (65) includes said execution information (33) generated during said calculation period and said execution information (33) generated before said calculation period.

6. A charging management apparatus (12) as defined in claim 1, wherein a target to be judged by said duplication judging section (65) includes said execution information (33) generated during said calculation period and said execution information (33) generated during a predetermined period before said calculation period.

7. A charging management apparatus (12) as defined in claim 5, wherein said calculation period is flexible.

8. A charging management apparatus (12) as defined in claim 1, wherein said execution number calculating section (66) counts the number of pieces of said execution information (33) during said calculation period after all pieces of execution information (33) during said calculation period are stored in said execution history (45).

9. A charging management apparatus (12) as defined in claim 1, wherein said execution number calculating section (66) counts the number of pieces of said execution information (33) at the time when said execution information (33) is stored in said execution history (45).

10. A charging management apparatus (12) as defined in claim 8, wherein said duplication judgment section (65) judges whether or not there are duplicated pieces of said execution information (33) at the time of counting the number of pieces of said execution information (33).

11. A charging management apparatus (12) as defined in claim 1, wherein
said duplication judging section (65) judges whether or not there are duplicated pieces of said execution information (33) at the time when said execution information (33) is stored in said execution history (45), and if there are duplicated pieces of said execution information (33), said duplication judging section (65) stores a duplication flag indicating that there are duplicated pieces of said execution information (33) in said execution history (45), and
said execution number calculating section (66) calculates the execution number of times by referring to said duplication flag.

12. A charging management apparatus (12) as defined in claim 1, wherein
said computer program is capable of executing plural kinds of processing,
said execution information (33) is assigned with a processing ID indicating the kind of processing, and
said duplication judging section (65) judges whether or not there are duplicated pieces of said execution information (33) for each of said processing IDs.

13. A charging management apparatus (12) as defined in claim 2, wherein
the input data is an examination image (31) which is obtained by a medical examination and assigned with a DICOM tag, and
the input data ID is an examination ID stored in said DICOM tag.

14. A charging management apparatus (12) as defined in claim 13, wherein said computer program is a bone mineral content measurement program for measuring a bone mineral content by an image analysis of said examination image (31).

15. A charging management system (10) comprising:
a charging management apparatus (12) for calculating a usage fee for a computer program which executes processing based on input data and outputs a result of the processing in accordance with the execution number of times the processing is executed, said charging management apparatus (12) including:
an execution history creating section (63) for creating an execution history (45) of said computer program based on execution information (33) containing an input data ID for identifying the input data one by one and indicating that the processing has been executed;
a duplication judging section (65) for checking whether or not there are plural pieces of said execution information (33) having the same input data ID by referring to said execution history (45), and judging that there are duplicated pieces of said execution information (33) if there are plural pieces of execution information (33) having the same input data ID in said execution history (45); and
an execution number calculating section (66) for counting the number of pieces of said execution information (33) during a calculation period of said usage fee so as to calculate the execution number of times while eliminating the pieces of execution information (33) judged to be duplicated by said duplication judging section (65);
a request outputting section (44) for outputting a request for calculating the execution number of times to said charging management apparatus (12); and
an input data outputting device (64) for outputting the input data to said charging management apparatus (12).

16. A charging management program for calculating a usage fee for a computer program which executes processing based on input data and outputs a result of the processing in accordance with the execution number of times the processing is executed, said charging management program causing a computer to function as an apparatus comprising:
an execution history creating section (63) for creating an execution history (45) of said computer program based on execution information (33) containing an input data ID for identifying the input data one by one and indicating that the processing has been executed;
a duplication judging section (65) for checking whether or not there are plural pieces of said execution information (33) having the same input data ID by referring to said execution history (45), and judging that there are duplicated pieces of said execution information (33) if there are plural pieces of execution information (33) having the same input data ID in said execution history (45); and
an execution number calculating section (66) for counting the number of pieces of said execution information (33) during a calculation period of said usage fee except the duplicated pieces of execution information (33) so as to calculate the execution number of times.
